(19) 

**Europäisches Patentamt**
**European Patent Office**
**Office européen des brevets**

(11) **EP 4 563 526 B1**

(12) **EUROPEAN PATENT SPECIFICATION**

(45) Date of publication and mention
of the grant of the patent:
**01.07.2026 Bulletin 2026/27**

(51) International Patent Classification (IPC):
***C01B 21/072*** *(2006.01)*     ***C08L 101/00*** *(2006.01)*
***C08K 3/28*** *(2006.01)*

(21) Application number: **23860362.5**

(22) Date of filing: **29.08.2023**

(52) Cooperative Patent Classification (CPC):
(C-Sets available)
**C01B 21/0728;** C01P 2004/03; C01P 2004/61;
C01P 2006/12; C08K 2003/282; C08K 2201/005
(Cont.)

(86) International application number:
**PCT/JP2023/031295**

(87) International publication number:
**WO 2024/048600 (07.03.2024 Gazette 2024/10)**

(54) **ALUMINUM NITRIDE POWDER AND RESIN COMPOSITION**

ALUMINIUMNITRIDPULVER UND HARZZUSAMMENSETZUNG

POUDRE DE NITRURE D'ALUMINIUM ET COMPOSITION DE RÉSINE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **30.08.2022 JP 2022136889**

(43) Date of publication of application:
**04.06.2025 Bulletin 2025/23**

(73) Proprietor: **TOKUYAMA CORPORATION
Yamaguchi 745-8648 (JP)**

(72) Inventors:
• **TAKAKUSAKI, Makoto**
**Shunan-shi, Yamaguchi 745-8648 (JP)**
• **FUKUNAGA, Yutaka**
**Shunan-shi, Yamaguchi 745-8648 (JP)**

• **IMOTO, Yasushi**
**Shunan-shi, Yamaguchi 745-8648 (JP)**
• **KURAMOTO, Akimasa**
**Shunan-shi, Yamaguchi 745-8648 (JP)**
• **CHIBURI, Masato**
**Shunan-shi, Yamaguchi 745-8648 (JP)**

(74) Representative: **Kraus & Lederer PartGmbB
Thomas-Wimmer-Ring 15
80539 München (DE)**

(56) References cited:
JP-A- 2012 056 774   JP-A- 2012 121 742
JP-A- 2012 193 054   JP-A- 2020 176 222
JP-A- 2020 176 222   JP-A- 2020 180 221
JP-A- 2020 180 221   JP-A- 2021 134 132
JP-A- H0 474 705   JP-A- H0 881 207
JP-A- H03 177 308   US-A- 5 646 078

**(Cont. next page)**

EP 4 563 526 B1

(52) Cooperative Patent Classification (CPC): (Cont.)

C-Sets
**C08K 3/28, C08L 63/00;**
**C08K 3/28, C08L 83/00**

**Description**

Technical Field

The present invention relates to an aluminum nitride powder and a resin composition containing the aluminum nitride powder.

Background Art

Aluminum nitride powder is known as a material that has high thermal conductivity and excellent electrical insulation properties, and is used, for example, as a thermal interface material.

A thermal interface material is a material that reduces the thermal resistance of the path through which heat generated by a semiconductor element is released to a heat sink or a housing, etc., and is used in a variety of forms such as sheets, gels, and greases. As the thermal interface material, heat dissipation materials in which a thermally conductive filler such as aluminum nitride is filled into a resin such as an epoxy resin or a silicone resin, are known.

When filling aluminum nitride into a resin, a method is known in which plurality of aluminum nitride with different average particle sizes are combined to increase the filling rate and make it easier to form a thermal path, thereby improving thermal conductivity.

Although particles with large particle sizes are easy to form a thermal conduction path in resin, they may be difficult to use in thin heat dissipation materials. In particular, spherical particles have a small contact area between particles in resin, and may be difficult to form a heat conduction path. On the other hand, particles with small particle sizes have difficulty in forming a thermal conduction path in the resin, and may have poor fluidity when filled into the resin. Therefore, aluminum nitride powder with an average particle size of about 5 to 50 $\mu$m is highly useful.

In Patent Literature 1, an invention relating to an aluminum nitride powder which has an average particle size $D_{50}$ of 15 to 200 $\mu$m, and a content of particles with a particle size of 5 $\mu$m or less of 60% or less based on a number, and which reduced alkaline earth metals, rare earth elements, oxygen content, and silicon content, is disclosed, and it is described that it has excellent filling ability into polymer materials. As a method for obtaining such aluminum nitride powder, a method in which aluminum nitride obtained by a direct nitridation method is crushed and heat-treated, is disclosed in the examples.

Note that the direct nitridation method is known as a method for synthesizing ceramics such as aluminum nitride, and since the nitriding reaction generates a large amount of heat and reaches high temperatures, the product is obtained as the bulk material. When used as a powder, a crushing treatment is required.

In Patent Literature 2, as an aluminum nitride powder capable of improving the thermal conductivity of heat dissipation members, an aluminum nitride powder having an average particle size of 20 to 50 $\mu$m, an oxygen content of 0.6 mass% or less, and an average half width of 0.095° or less for the three diffraction peaks of the Miller indices (100), (002), and (101) planes obtained by X-ray diffraction, is disclosed.

Furthermore, in Patent Literature 3, an aluminum nitride powder containing particles having smooth surfaces in order to improve the contact area between particles, is proposed.

In Patent Literature 4, filling ability to resin, thermal conductivity, etc., are studied for an aluminum nitride powder with an average particle size ($D_{50}$) of 60 $\mu$m obtained by enlarging the crystal grains using a combustion synthesis method, followed by crushing and classification, and it is described that each of these properties were good.

In Patent Literature 5, a composite filler is disclosed containing 10 to 100 parts by volume of an inorganic powder (B) containing alumina particles with respect to 100 parts by volume of aluminum nitride powder (A) containing aluminum nitride particles having a polyhedron structure.

In Patent Literature 6, an aluminum nitride powder is disclosed comprising polycrystalline particles which have clearly observed grain boundaries, an agglomerated particle size of 0.1 to 100 $\mu$m when measured by a particle size distribution analyzer, a tapped bulk density of 0.55 to 2.0 g/cm$^3$, and a ratio of a number average particle size calculated from a SEM photograph image to a particle size calculated from a BET specific surface area of 1.1 to 3.

In Patent Literature 7, a composite filler is disclosed which is a polyhedral particle with a face structure having at least two flat surfaces, and includes aluminum nitride powder having a cumulative 50% value ($D_{50}$) in a particle size distribution curve of 20 $\mu$m to 200 $\mu$m, and aluminum nitride whiskers having an average diameter (D) of 0.1 to 1.0 $\mu$m and an average length (L) in the range of 10 to 80 $\mu$m.

In Patent Literature 8, an aluminum nitride powder is disclosed which comprises polycrystalline particles with clearly recognizable grain boundaries, having an agglomerated particle size of 0.1 to 100 $\mu$m as measured by a particle size distribution measuring device, a packed density of 0.55 to 2.0 g/cm$^3$, and a value obtained by dividing the number average particle size determined from an SEM image by the particle size determined from the BET specific surface area of 1.1 or more and 3 or less.

Citation List

Patent Literature

PTL 1: WO2018/216591
PTL 2: JP 2003-119010 A
PTL 3: WO2017/131239
PTL 4: JP 2022-067865 A
PTL 5: JP 2020 180221 A
PTL 6: US 5,646,078 A
PTL 7: JP 2020 176222 A
PTL 8: JP H08 81207 A

Summary of Invention

Technical Problem

In the above-described conventional arts, the aluminum nitride powders disclosed in Patent Literatures 1 and 4 are aluminum nitride powders obtained by direct nitridation method or combustion synthesis, and since it has low oxygen content due to the production method, the particles themselves have excellent thermal conductivity. However, since the powders are obtained by crushing or disintegrating the bulk materials after the reaction, the particles that constitutes the powder are irregularly shaped or strong aggregate, and it is difficult to obtain particles having smooth surfaces. In addition, the above particles have a high aspect ratio (the ratio (L/D) of the major axis (L) to the minor axis (D) of the particle) and are also affected by the surface properties, so that the fluidity when filled into a resin is not fully satisfactory.

Furthermore, the aluminum nitride powder disclosed in Patent Literature 2 enhances crystallinity by heating the raw material aluminum nitride powder and achieves a low oxygen content, and is characterized by heat-treating crushed powder with limited fine particles that promote grain growth to produce aluminum nitride powder with the desired particle size and low oxygen content. Therefore, the particle shape of the resulting aluminum nitride powder is irregularly shaped, and due to the presence of fractured surfaces, no smooth surfaces are formed.

Furthermore, since the aluminum nitride powder described in Patent Literature 3 contains particles having smooth surfaces, it is expected that the fluidity between particles when filled into a resin and the thermal conductivity due to surface contact will be improved. However, since the oxygen concentration is high due to the manufacturing method for forming the smooth surfaces, there was room for improvement in the thermal conductivity of the particles themselves.

As described above, when filling aluminum nitride powder in a resin, conventional aluminum nitride powder, particularly that used as medium-sized particles, does not fully satisfy the demand for high heat dissipation properties associated with the increasing packaging density of power devices in recent years, and there was room for further improvement.

Accordingly, the object of the present invention is to provide an aluminum nitride powder having high thermal conductivity when filled in a resin to obtain a resin composition, and good fluidity.

Solution to Problem

The present inventors have intensively studied to achieve the above object. As a result, by adopting a specific manufacturing method described below, the inventors have succeeded in developing an aluminum nitride powder having a low oxygen content that effects the thermal conductivity of the particles themselves, a smooth surface that is effective in increasing fluidity, a small aspect ratio, and an average particle size of about 5 to 50 $\mu$m, thereby completing the present invention.

A gist of the present invention is described in the following items [1] to [6].

[1] An aluminum nitride powder having an average particle size of 5 to 50 $\mu$m and an oxygen content of 0.5 % by mass or less, containing: polyhedral particles having at least two smooth surfaces under observation with a scanning electron microscope at 500x magnification, wherein in a SEM image at 2000x of the cross-section of the particles, for 10 arbitrarily selected particles, the maximum value of the perpendicular distance between the outer line corresponding to the smooth surface and a straight line connecting the ends of the outer line is denoted as M, and among the measured values of M for each of the 10 selected particles, the largest value $M_{max}$ is 0.3 $\mu$m or less, and in which for the polyhedral particles with a major axis (L) of 5 $\mu$m or more, the average value of the ratio (L/D) of the major axis (L) to the minor axis (D) is within the range of 1.0 to 1.4.

[2] The aluminum nitride powder according to the above item [1], in which the proportion of the polyhedral particles is 70 % or more.

[3] The aluminum nitride powder according to the above item [1] or [2], wherein in a SEM image at 2000x of a cross-section of the polyhedral particles, for 10 particles arbitrarily selected, the average value ($M_A$) of the maximum value M of the perpendicular distance between the outer line corresponding to the smooth surface and the straight line connecting the ends of the outer line is 0.15 $\mu$m or less.

[4] The aluminum nitride powder according to any one of the above items [1] to [3], used for resin filling.

[5] A resin composition containing the aluminum nitride powder according to any one of the above items [1] to [4], and a resin.

[6] A method for producing an aluminum nitride powder according to any one of the above items [1] to [3] containing: a step 1 of mixing 100 parts by mass of a first aluminum nitride powder raw material having an average particle size of 0.5 to 5 $\mu$m and a specific surface area of 1.2 to 16.0 m$^2$/g with 1 to 20 parts by mass of a second aluminum nitride powder raw material having an average particle size of 3 to 40 $\mu$m, a specific surface area of 0.05 to 1.8 m$^2$/g, and a ratio (SA2/SA1) of the specific surface area (SA2) of the second aluminum nitride powder raw material relative to the specific surface area (SA1) of the first aluminum nitride powder raw material of 0.8 or less, to prepare a raw material mixture; and a step 2 of heating the raw material mixture to 1750 to 2100 °C while supplying an inert gas.

Advantageous Effects of Invention

According to the present invention, it is possible to provide an aluminum nitride powder with an average particle size of approximately 5 to 50 $\mu$m, which has a low oxygen content, resulting in high thermal conductivity of the particles themselves, and which has two or more smooth surfaces and a small aspect ratio, resulting in extremely high fluidity when filled into a resin, and furthermore, which is capable of imparting extremely high thermal conductivity to a resin composition filled with this due to an increase in the contact area between particles caused by the smooth surfaces.

Brief Description of Drawings

FIG. 1 is a SEM observation image of the aluminum nitride powder of the present invention.
FIG. 2 is a SEM observation image of the aluminum nitride powder obtained in the Example 26.
FIG. 3 is a diagram illustrating the definition of the smooth surface of a particle that constitutes the aluminum nitride powder of the present invention.

Description of Embodiments

[Aluminum nitride powder]

An aluminum nitride powder of the present invention has an average particle size of 5 to 50 $\mu$m and an oxygen content of 0.5 % by mass or less, and contains polyhedral particles having at least two smooth surfaces under observation with a scanning electron microscope at 500x magnification, wherein in a SEM image at 2000x of the cross-section of the particles, for 10 arbitrarily selected particles, the maximum value of the perpendicular distance between the outer line corresponding to the smooth surface and a straight line connecting the ends of the outer line is denoted as M, and among the measured values of M for each of the 10 selected particles, the largest value $M_{max}$ is 0.3 $\mu$m or less, and in which the average value of the ratio (L/D) of the major axis (L) to the minor axis (D) of the polyhedral particles that have a major axis (L) of 5 $\mu$m or more is within the range of 1.0 to 1.4.

<Polyhedral particles>

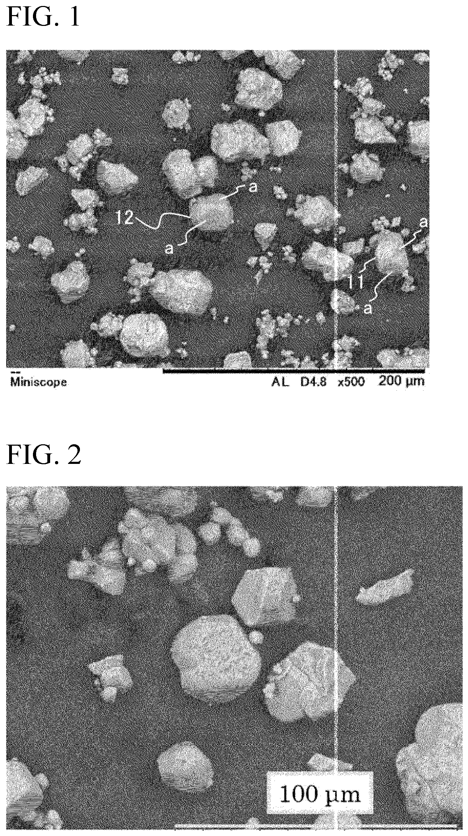

FIG. 1 shows an image of the aluminum nitride powder of the present invention obtained by observation with a scanning electron microscope at 500x magnification. The aluminum nitride powder is constituted of a plurality of aluminum nitride particles, and contains plurality of polyhedral particles such as polyhedral particle 11 and polyhedral particle 12.

The polyhedral particle 11 is an aluminum nitride particle having a polyhedral shape where at least two smooth surfaces 'a' are randomly present. Similarly, the polyhedral particle 12 is an aluminum nitride particle having at least two smooth surfaces 'a'. In FIG. 1, in addition to the polyhedral particle 11 and the polyhedral particle 12, a plurality of polyhedral particles are present.

The smooth surface 'a' provided on the polyhedral particle is a smooth surface on which no irregularity structure is observed under observation with a scanning electron microscope at 500x magnification, as shown in FIG. 1, and is a surface derived from the crystal growth surface of aluminum nitride. Moreover, the smooth surface 'a' is different from a fractured surface formed by crushing aluminum nitride particles. Since the fractured surface has poor smoothness compared with the smooth surface, and an uneven structure derived from the crushing can be confirmed by observation with a scanning electron microscope, it can be distinguished from the smooth surface. Furthermore, the smoothness of the above-described smooth surface 'a' will be explained in more detail in the examples. In a SEM image at 2000x of the cross-section of the particles, for 10 arbitrarily selected particles, the maximum value of the perpendicular distance between the outer line corresponding to the smooth surface and a straight line connecting the ends of the outer line is denoted as M, and among the measured values of M for each of the 10 selected particles, the largest value $M_{max}$ is 0.3 $\mu$m or less, and preferably 0.2 $\mu$m or less. The average value $M_A$ of M for 10 particles is further preferably 0.15 $\mu$m or less.

Note that for the fractured surface generated by crushing a bulk material of aluminum nitride, the above-described $M_{max}$ does not become smaller than 0.3 $\mu$m including irregularity and undulation, even on a smooth surface, and the average value $M_A$ of the above-described maximum values does not become smaller than 0.15 $\mu$m.

The aluminum nitride powder of the present invention contains polyhedral particles, and therefore when filled into a resin, the thermal conductivity of the resin composition is likely to be improved. Although the reason for this is not obvious, it is considered that the presence of polyhedral particles having multiple smooth surfaces increases the contact area between particles in the resin, making it easier to form thermal conduction paths. Furthermore, the presence of smooth surface improves the fluidity of the particles, and can contribute to improving the filling ability when filled into a resin.

In the present invention, the number of the smooth surfaces provided on the polyhedral particles is not particularly limited as long as it is two or more, and from the viewpoint of increasing the contact area between particles when filled in a resin, it is preferably three or more. The upper limit of the smooth surfaces provided on the polyhedral particle is not particularly limited, and it is for example 10. The number of smooth surfaces provided on the polyhedral particle is determined based on an image captured by a scanning electron microscope (SEM) observation at 500x magnification.

In addition, it is preferable that the two consecutive smooth surfaces are continuous so as to form an edge portion.

The area of the individual smooth surfaces provided on the polyhedral particles should be large by a certain degree from the viewpoint of increasing the contact area between particles when they are filled into the resin to improve thermal conductivity. From this viewpoint, it is preferable that the polyhedral particles have at least two smooth surfaces with an area of 2 to 1600 $\mu$m$^2$, and it is more preferable that they have at least three smooth surfaces with an area of 2 to 1600 $\mu$m$^2$.

Note that the area of smooth surface is determined by an image captured by a scanning electron microscope (SEM) observation at 500x magnification.

The proportion of the polyhedral particles in the aluminum nitride powder of the present invention is preferably 70% or more, more preferably 80% or more, and further preferably 90% or more, from the viewpoint of improving the thermal conductivity of a resin composition in which the aluminum nitride powder is filled into a resin. The proportion of polyhedral particles is the proportion of the total area of polyhedral particles to the total area of all aluminum nitride particles identified in an image observed under a scanning electron microscope at 500x magnification.

As described above, the smooth surfaces provided on the polyhedral particles are different from the fractured surfaces, which have undulation and irregularity. When an aluminum nitride powder containing a small number of particles having a fractured surface is used, the fluidity of the resin composition filled in the resin tends to be improved. Therefore, the proportion of the particles having a fractured surface in the aluminum nitride powder of the present invention is preferably 20 % or less, more preferably 10 % or less. The proportion of particles having a fractured surface is the proportion of the total area of particles having a fractured surface to the total area of all aluminum nitride particles identified in an image observed under a scanning electron microscope at 500x magnification.

<A ratio of major axis/minor axis of polyhedral particles>

In the aluminum nitride powder of the present invention, the average value of a ratio (L/D) of the major axis (L) to the minor axis (D) of polyhedral particles having a major axis (L) of 5 $\mu$m or more, is in the range of 1.0 to 1.4. When the ratio (L/D) exceeds 1.4, the fluidity of the resin composition in which the aluminum nitride powder is filled into the resin tends to decrease, resulting in poor handling properties.

From the viewpoint of improving the fluidity of the resin composition, the average value of the ratio (L/D) of the major axis (L) to the minor axis (D) of the polyhedral particles having a major axis (L) of 5 $\mu$m or more is preferably 1.0 to 1.3, and more preferably 1.0 to 1.2.

Here, the major axis (L) and minor axis (D) of the polyhedral particles are determined based on the shape of the polyhedral particles observed under a scanning electron microscope at 500x magnification.

The major axis (L) is defined as the maximum distance between two arbitrary points on the perimeter of the polyhedral particle. The minor axis (D) is defined as a line segment that intersects the major axis (L) perpendicularly and runs through the midpoint of the major axis (L) and two points on the perimeter of the polyhedral particle.

The average value of the ratio (L/D) of the major axis (L) to the minor axis (D) is calculated by determining the ratio (L/D) for at least 20 polyhedral particles having a major axis (L) of 5 $\mu$m or more, and averaging these.

The aluminum nitride powder containing polyhedral particles of the present invention can be obtained, for example, by the manufacturing method described below.

<Average particle size>

The average particle size of the aluminum nitride powder of the present invention is 5 to 50 $\mu$m. Aluminum nitride powder having such a medium average particle size is highly useful since it can be easily used for filling resins. When the average particle size is too large, it may be difficult to use it in, for example, a thin heat dissipation material, while when the average particle size is too small, the thermal conductivity tends to be low. The average particle size of the aluminum nitride powder of the present invention is preferably 5 to 40 $\mu$m, and more preferably 5 to 30 $\mu$m.
In this specification, the average particle size of the aluminum nitride powder means the particle size (D50) at which the cumulative volume of the particles is 50% as measured by a laser diffraction particle size distribution analyzer.

<Oxygen content>

The oxygen content of the aluminum nitride powder of the present invention is 0.5 mass % or less.
The oxygen content is the total amount of oxygen measured by a high temperature pyrolysis method described in the Examples.
When the oxygen content exceeds 0.5 % by mass, the thermal conductivity of the aluminum nitride powder decreases, and therefore the thermal conductivity of the resin composition filled with the aluminum nitride powder also decreases. The oxygen content of the aluminum nitride powder is preferably 0.4 mass % or less, more preferably 0.3 mass % or less, and further preferably 0.2 mass % or less. Polyhedral particles having such low oxygen concentration are provided by the present invention for the first time, and this allows the aluminum nitride powder of the present invention to exhibit high thermal conductivity as shown below.

<Thermal conductivity>

The thermal conductivity of the aluminum nitride powder of the present invention is preferably 80 W/m·K or more, more preferably 120 W/m·K or more, and further preferably 160 W/m·K or more. Since the aluminum nitride powder itself has such a high thermal conductivity, the thermal conductivity of the resin composition when the aluminum nitride powder is filled into the resin is also increased, and excellent heat dissipation properties can be exhibited. The higher the thermal conductivity of the aluminum nitride powder, the better, however it is generally 230 W/m·K or less. The thermal conductivity of the aluminum nitride powder can be adjusted by adjusting the oxygen content, etc.
Note that the thermal conductivity of the aluminum nitride powder is measured based on microscopic Raman spectroscopy, and details will be described in the Examples.

[Method for producing aluminum nitride powder]

The method for producing the aluminum nitride powder of the present invention is not particularly limited as long as it is a method that can produce aluminum nitride powder containing the above-described polyhedral particles and having the above-described average particle size and oxygen content, however a method including the following steps 1 and 2 is preferred.
Step 1: A step of mixing 100 parts by mass of a first aluminum nitride powder raw material with an average particle size of 0.5 to 5 $\mu$m and a specific surface area of 1.2 to 16.0 m$^2$/g with 1 to 20 parts by mass of a second aluminum nitride powder raw material with an average particle size of 3 to 40 $\mu$m, a specific surface area of 0.05 to 1.8 m$^2$/g, and a ratio (SA2/SA1) of the specific surface area (SA2) of the second aluminum nitride powder raw material relative to the specific surface area (SA1) of the first aluminum nitride powder raw material of 0.8 or less, to prepare a raw material mixture
Step 2: A step of heating the raw material mixture to 1750 to 2100 °C while supplying an inert gas

<Step 1>

Step 1 is a step of mixing 100 parts by mass of a first aluminum nitride powder raw material with an average particle size of 0.5 to 5 $\mu$m and a specific surface area of 1.2 to 16.0 m$^2$/g with 1 to 20 parts by mass of a second aluminum nitride powder raw material with an average particle size of 3 to 40 $\mu$m, a specific surface area of 0.05 to 1.8 m$^2$/g, and a ratio (SA2/SA1) of the specific surface area (SA2) relative to the specific surface area (SA1) of the first aluminum nitride powder raw material of 0.8 or less, to prepare a raw material mixture.
By containing aluminum nitride with different average particle sizes in predetermined blending amounts in the raw material mixture, and by subjecting it to a heating step (step 2) described below, the aluminum nitride powder of the present invention can be obtained.

In other words, it is considered that by having an appropriate amount of the second aluminum nitride powder raw material with a relatively large average particle size, during the heating step, the first aluminum nitride powder raw material with a small average particle size is incorporated into the second aluminum nitride powder raw material through a sublimation reaction, causing the second aluminum nitride powder raw material to undergo crystal growth, resulting in an increase in particle size. It is presumed that the above-described predetermined polyhedral particles are formed by such crystal growth. Furthermore, it is presumed that, since the oxygen present in the first aluminum nitride powder is effectively removed by the above-described sublimation reaction, the aluminum nitride powder of the present invention produced through the heating step has a low oxygen concentration.

On the other hand, when the first and second aluminum nitride powder raw materials are not used in combination in the predetermined amounts, phenomena such as insufficient particle growth and aggregation of particles occur, making it difficult to obtain the aluminum nitride powder of the present invention.

The first aluminum nitride powder raw material has an average particle size of 0.5 to 5 $\mu$m and a specific surface area of 1.2 to 16.0 $m^2$/g, and preferably has an average particle size of 0.7 to 5 $\mu$m and a specific surface area of 1.2 to 12.0 $m^2$/g.

The second aluminum nitride powder raw material has an average particle size of 3 to 40 $\mu$m and a specific surface area of 0.05 to 1.8 $m^2$/g. The average particle size of the second aluminum nitride powder raw material may be appropriately selected depending on the average particle size of the aluminum nitride powder of the present invention to be produced, and is preferably 3 to 20 $\mu$m, more preferably 5 to 15 $\mu$m.

In the raw material mixture, the blending amount of the second aluminum nitride powder raw material with respect to 100 parts by mass of the first aluminum nitride powder raw material is 1 to 20 parts by mass, preferably 2 to 15 parts by mass, and more preferably 3 to 10 parts by mass. As described above, the aluminum nitride powder of the present invention can be obtained by appropriately adjusting the blending amounts of the first and second aluminum nitride powder raw materials.

The ratio (SA2/SA1) of the specific surface area (SA2) of the second aluminum nitride powder raw material to the specific surface area (SA1) of the first aluminum nitride powder raw material is 0.8 or less. By adjusting the ratio of the specific surface areas (SA2/SA1) in this manner, the aluminum nitride powder of the present invention can be easily obtained. The above-described ratio of the specific surface areas (SA2/SA1) is preferably 0.7 or less, and more preferably 0.6 or less.

To promote the growth of the particles, additives that promote grain growth may be added during firing. Additives are not particularly limited, and oxides, fluorides, chlorides, etc. of alkali metals, alkali metals or rare earth elements can be used.

As the first and second aluminum nitride powder raw materials, any commonly used material can be used without any particular restrictions as long as they have the predetermined average particle size, and it may be one produced by a reduction nitridation method, or it may be one produced by a direct nitridation method such as a combustion synthesis method and then adjusted to a predetermined average particle size through a crushing and classification process, or it may be one produced by a manufacturing method other than these.

It is also preferable to use the aluminum nitride powder of the present invention produced by steps 1 and 2 as a second aluminum nitride powder raw material and perform steps 1 and 2 again to obtain aluminum nitride powder of the present invention having a larger average particle size.

<Step 2>

Step 2 is a step of heating the raw material mixture prepared in the step 1 to 1750 to 2100 °C while supplying an inert gas.

When the heating temperature is less than 1750 °C, the crystal growth of the aluminum nitride particles is not promoted, making it difficult to obtain aluminum nitride powder containing aluminum nitride particles having smooth surfaces. On the other hand, when the heating temperature exceeds 2100 °C, fusion between particles is likely to occur. From this viewpoint, the heating temperature is preferably from 1750 to 2100 °C, more preferably from 1800 to 2050 °C, and further preferably from 1800 to 2000 °C.

A heating time is not particularly limited, and it is preferably 1 to 20 hours, more preferably 2 to 15 hours. When the above-described heating time is shorter than 1 hour, the crystal growth of the aluminum nitride particles will not proceed sufficiently, making it difficult to form a smooth surface. On the other hand, even when heating is performed for more than 20 hours, grain growth becomes difficult to proceed, which is disadvantageous in industrial practice.

The heating is performed under supply of an inert gas. That is, an embodiment in which an inert gas is supplied into a heating device for placing and heating the raw material mixture, and then the raw material mixture is heated, is most preferred, however it is also possible to heat the raw material mixture while continuously supplying the inert gas. The raw material mixture is filled in a heating device (hereinafter also referred to as a "setter") and placed in the heating device, and as the above-described setter, a setter made of carbon is preferably used. Furthermore, as the inert gas, argon gas and nitrogen gas are generally used, and among these, nitrogen gas is suitably used.

<Other steps>

After step 2, a disintegrating step may be performed as necessary. Disintegrating is performed in order to break apart the loosely bonded aluminum nitride particles, and it differs from crushing in which the aluminum nitride particles are partially fractured. Therefore, even when a disintegrating step is performed, the shape of the above-described polyhedral particles is maintained, and very few particles having fractured surfaces are produced.

Disintegrating can be performed using unknown methods, for example, by using a roll crusher mill, pin mill, vibration mill, jet mill, ball mill, masscolloider, or jaw crusher.

Furthermore, an oxidation step may also be performed after step 2, and it is preferable to perform the oxidation step after the above-described disintegrating step. By performing the oxidation step, decomposition due to contact with water or the like can be prevented.

The oxidation step can be performed by heating in air atmosphere. The heating temperature in the oxidation step is not particularly limited, and is preferably 500°C to 900°C, more preferably 600°C to 800°C. A heating time is not particularly limited, and it is preferably 1 to 20 hours, more preferably 5 to 15 hours.

The oxygen content of the oxide film formed in the above-described oxidation step is included in the oxygen content of the aluminum nitride powder. By performing the oxidation step so that the oxygen content does not exceed the range of the oxygen content of the aluminum nitride powder, it is possible to impart excellent thermal conductivity to the resulting resin composition when filled into a resin.

The aluminum nitride powder of the present invention may be subjected to a surface treatment as necessary for the purpose of improving compatibility with resins, water resistance, and the like. As the surface treatment, known methods can be employed. The surface treatment can be performed using, for example, organic silicon compounds such as silicone oil, silylating agents, and silane coupling agents; acids such as phosphoric acid, phosphates, and fatty acids; polymer compounds such as polyamide resins; and inorganic substances such as alumina and silica.

<Applications>

The applications of the aluminum nitride powder of the present invention are not particularly limited, and while it can be used as a raw material for aluminum nitride substrates, it is preferably used for resin filling. It is preferable that the aluminum nitride powder of the present invention is filled into a resin and used as a resin composition containing the resin and the aluminum nitride powder. As described above, the aluminum nitride powder of the present invention has a low oxygen content, resulting in a high thermal conductivity of the aluminum nitride powder itself. Furthermore, since it contains polyhedral particles with multiple smooth surfaces, the contact area between the particles is large, by which facilitates the effective formation of thermal conduction paths within the resin composition. Therefore, the thermal conductivity of the resin composition is increased, making it suitable for use as a heat dissipation material.

The resin contained in the resin composition is not particularly limited, and examples thereof include thermosetting resins such as epoxy resins, epoxy resins having a mesogen group introduced therein, unsaturated polyester resins, polyimide resins, and phenolic resins; thermoplastic resins such as polyethylene, polypropylene, polyamide, polycarbonate, and polyphenylene sulfide; rubbers such as ethylene propylene rubber and styrene butadiene rubber; and silicone resins. Among these, epoxy resins and silicone resins are preferred.

The content of the aluminum nitride powder of the present invention contained in the resin composition is not particularly limited, and is preferably 600 to 2500 parts by mass, and more preferably 1000 to 2500 parts by mass, with respect to 100 parts by mass of the resin. When the content of aluminum nitride powder is equal to or more than these lower limits, the thermal conductivity of the resin composition is improved, and when the content of aluminum nitride powder is equal to or less than these upper limits, the fluidity of the resin composition is increased, and the handleability, such as moldability, is improved.

The resin composition may contain other fillers other than the aluminum nitride powder of the present invention, as long as the effects of the present invention are not impaired.

Examples of the other fillers include aluminum nitride powder, which does not satisfy the requirements of the present invention, as well as alumina, zinc oxide, boron nitride, silicon nitride, silicon carbide, and graphite.

The mixing ratio of the aluminum nitride powder of the present invention to other fillers can be appropriately adjusted within the range of 1:99 to 99: 1.

The resin composition may contain additives such as a plasticizer, a vulcanizing agent, a curing accelerator, and a release agent, as necessary.

The resin composition can be produced by mixing each components by a blender or a mixer. The resin composition obtained in such a manner can be made into a heat dissipation material of a desired form, such as a heat dissipation sheet or heat dissipation grease, by a known molding method. Examples of molding methods include extrusion molding, press molding, the doctor blade method, and the resin impregnation method, and thermal curing or light curing may be performed after the molding process, as needed.

Examples

Hereinafter, Examples are shown to more specifically describe the present invention, but the present invention is not limited to these Examples.

[Measurement Methods]

Various physical properties in the Examples and Comparative Examples were measured by the following methods.

(1) Average particle size, Specific surface area

The average particle size ($D_{50}$) was measured by dispersing aluminum nitride powder in an aqueous solution of sodium pyrophosphate by a homogenizer and using a laser diffraction particle size distribution analyzer ("MICROTRAC HRA" manufactured by Nikkiso Co., Ltd.).

The specific surface area was determined by the BET method using $N_2$ adsorption with flow-type automatic surface area analyzer, FlowSorb 2300, manufactured by SHIMADZU CORPORATION.

(2) Presence or absence and Proportion of polyhedral particles

For the aluminum nitride powder, SEM images (accelerating voltage of 15 kV, secondary electron detection) were taken using a scanning electron microscope (Hitachi High-Technologies Corporation model 'TM3030') at 500x magnification. From the SEM images, the presence or absence of particles having two or more smooth surfaces was checked, and the presence or absence of polyhedral particles was determined.

Additionally, the proportion of polyhedral particles was calculated from image analysis of the above SEM images by determining the ratio of the total area of polyhedral particles to the total area of all aluminum nitride particles, and this ratio was defined as the proportion of polyhedral particles. The field number in the SEM images should be ten or more. Specifically, it was calculated using the following formula.

Proportion (%) of polyhedral particles = [(total area of polyhedral particles) / (total area of all aluminum nitride particles)] $\times$ 100

(3) The ratio (L/D) of Major axis (L) to Minor axis (D) of polyhedral particles

From the SEM image obtained in (2) above, the ratio of the major axis (L) to the minor axis (D) was determined for 20 polyhedral particles having a major axis (L) of 5 $\mu$m or more, and these were averaged to obtain the ratio (L/D) of the major axis (L) to the minor axis (D) of the polyhedral particles.

Note that, in the Comparative Example, for the aluminum nitride powder in which no polyhedral particles were confirmed, the ratio (L/D) was determined in the same manner as above for particles having a major axis (L) of 5 $\mu$m or more.

(4) Evaluation for smoothness of smooth surface

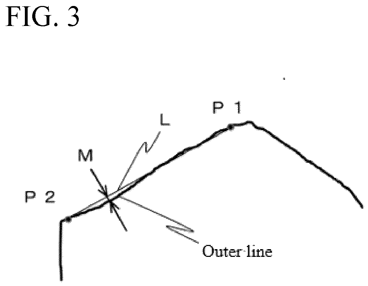

After filling the aluminum nitride powder into acrylic resin and curing it, a cut was made at an arbitrary location. In the SEM image of the cross-section at 2000x magnification, 10 arbitrary particles having smooth surfaces were selected. As shown in Figure 3, a line L was drawn connecting the endpoints P1 and P2 of the outer line that forms the smooth surface. The maximum value of the perpendicular distance between the above-described line L and the outer line was denoted as M. Among the measured values of M for each of the above-described 10 selected particles, the largest value was denoted as $M_{max}$. The average value of the above-described M was shown as $M_A$.

(5) Oxygen content

The oxygen content of the aluminum nitride powder was measured using an oxygen and nitrogen analyzer "EMGA-620W" manufactured by Horiba, Ltd., based on the amount of CO gas generated by the high temperature pyrolysis method in a graphite crucible, and the oxygen content (oxygen concentration) contained in the aluminum nitride powder was measured.

(6) Thermal conductivity of Aluminum nitride powder

The thermal conductivity of the aluminum nitride powder was measured based on the micro-Raman spectroscopy described in JP 2021-143968 A. Specifically, it is as follows.

(Preparation of Calibration curve)

The following aluminum nitride sintered bodies S1 to S4 were used as samples for preparing a calibration curve.

S1: Commercial product, relative density of 99% or more, hexagonal crystal system, thermal conductivity measured by the laser flash method: 90 W/m·K
S2: Commercial product, relative density of 99% or more, hexagonal crystal system, thermal conductivity measured by the laser flash method: 175 W/m·K
S3: Commercial product, relative density of 99% or more, hexagonal crystal system, thermal conductivity measured by the laser flash method: 200 W/m·K
S4: Commercial product, relative density of 99% or more, hexagonal crystal system, thermal conductivity measured by the laser flash method: 239 W/m·K

The Raman spectra of commercial aluminum nitride sintered body samples S1 to S4 were measured using a micro-Raman spectrometer (manufactured by JASCO Corporation: NRS-7100) under the conditions of excitation wavelength of 532 nm, output of 10.9 to 11.0 mW, 100x objective lens, measurement time of 30 seconds accumulated twice, grating of 3000 lines/mm, slit of $10 \times 1000$ $\mu$m, aperture of 4000 $\mu$m, spectral resolution of 0.47 cm$^{-1}$, beam spot diameter of 1 $\mu$m, and spectrometer focal length of 500 mm. From the obtained Raman spectra, the half widthof the peak corresponding to the $E_2^H$ mode (around the peak at 655 cm-1), which is one of the characteristic peaks of aluminum nitride, was determined. The half width was measured at six locations for a single sample, and the average value was taken as the peak half widthof that sample.
Next, the thermal conductivity of the aluminum nitride sintered body samples whose peak half width were measured was determined by the laser flash method.
The relationship between the obtained thermal conductivity and the peak half width was plotted on a graph to confirm the relationship. The logarithm of the peak half width was directly proportional to the logarithm of the thermal conductivity, and a calibration curve represented by the following formula was obtained.

$$\log (\lambda) = A\log (W) + B$$

In the above formula, $\lambda$ is the thermal conductivity, W is the peak half width, Ais -2.25, and B is 3.50.

(Measurement of Thermal conductivity)

The thermal conductivity of the aluminum nitride powder obtained in each of the Examples and Comparative Examples was measured using a micro-Raman spectrometer (NRS-7100, manufactured by JASCO Corporation). The measurement conditions were set as follows: excitation wavelength of 532 nm, output of 10.9 to 11.0 mW, 100x objective lens , measurement time of 30 seconds accumulated twice, grating of 3000 lines/mm, slit of $10 \times 1000$ $\mu$m, aperture of 4000 $\mu$m, spectral resolution of 0.47 cm$^{-1}$, beam spot diameter of 1 $\mu$m, and spectrometer focal length of 500 mm. For the measurement, the Raman spectroscopy measurement was performed on aluminum nitride powder samples sprinkled onto a slide glass to disperse them, by selecting particles with a particle size close to the average particle size in the powder were selected through observation with an optical microscope, and focusing on the surface of those particles.
In the obtained Raman spectrum, a peak of the $E_2^H$ mode (a peak near 655 cm$^{-1}$ ), which is one of the characteristic peaks of aluminum nitride, was selected, and the half width of the peak was determined. The half width was measured for 6 particles in a single sample, and the average value was taken as the peak half width of that sample. The thermal conductivity of the aluminum nitride powder was calculated from the obtained peak half width and the calibration curve.

(7) Thermal conductivity of Resin Composition

A resin composition was obtained by mixing 100 parts by mass of aluminum nitride powder and 10 parts by mass of resin. An epoxy resin was used as the resin. The resin composition was hot pressed at 100 °C to obtain a sheet having a thickness of 1 mm. The thermal conductivity of the obtained sheet was measured by the laser flash method.

(8) Fluidity of Resin composition

For the resin composition obtained in (7) above, the discharge volume per minute (g/min) was measured using a syringe "PSY-30F" manufactured by Musashi Engineering Co., Ltd.
The inner diameter of the body part of the syringe for storing the sample was 22 mm, and the inside diameter of the tip part for discharging the sample was 2 mm. The discharge pressure was set to 0.62 Pa.

(Example 1)

A raw material mixture was prepared by mixing 100 parts by mass of aluminum nitride powder raw material with an average particle size of 0.5 $\mu$m and a specific surface area of 15.7 m$^2$/g and 1 part by mass of aluminum nitride powder raw material with an average particle size of 3.2 $\mu$m and a specific surface area of 1.68 m$^2$/g.
The raw material mixture was placed in a heating device, nitrogen gas was supplied into the device to create a nitrogen atmosphere, and the raw material mixture was heated at 1950 °C for 4 hours. The heating was performed under normal pressure. The obtained aluminum nitride powder was disintegrated in a planetary ball mill and subjected to oxidation treatment at 700 °C for 8 hours in an air atmosphere to obtain aluminum nitride powder (AL-1) with an average particle size of 5.0 $\mu$m and a specific surface area of 0.96 m$^2$/g. The disintegrating and oxidation treatments were performed in the same manner in all of the following examples, and therefore will be omitted below. The results of various measurements on the aluminum nitride powder are shown in Table 1.

(Example 2)

A raw material mixture was prepared by mixing 100 parts by mass of aluminum nitride powder raw material with an average particle size of 1.0 $\mu$m and a specific surface area of 2.81 m$^2$/g, 5 parts by mass of aluminum nitride powder raw material with an average particle size of 3.0 $\mu$m and a specific surface area of 1.79 m$^2$/g, and 0.1 parts by mass of sulfur as an additive.
The raw material mixture was placed in a heating device, nitrogen gas was supplied into the device to create a nitrogen atmosphere, and the raw material mixture was heated at 1800 °C for 20 hours. Heating was performed under normal pressure, followed by disintegrating and oxidation treatment, to obtain aluminum nitride powder (AL-2) with an average particle size of 6.9 $\mu$m and a specific surface area of 0.70 m$^2$/g. The results of various measurements on the aluminum nitride powder are shown in Table 1.

(Example 3)

A raw material mixture was prepared by mixing 100 parts by mass of aluminum nitride powder raw material with an average particle size of 1.0 $\mu$m and a specific surface area of 2.81 m$^2$/g, 5 parts by mass of aluminum nitride powder raw material with an average particle size of 3.0 $\mu$m and a specific surface area of 1.79 m$^2$/g, and 0.1 parts by mass of yttrium oxide as an additive.
The raw material mixture was placed in a heating device, nitrogen gas was supplied into the device to create a nitrogen atmosphere, and the raw material mixture was heated at 1800 °C for 20 hours. Heating was performed under normal pressure, followed by disintegrating and oxidation treatment, to obtain aluminum nitride powder (AL-3) with an average particle size of 7.0 $\mu$m and a specific surface area of 0.69 m$^2$/g. The results of various measurements on the aluminum nitride powder are shown in Table 1.

(Example 4)

A raw material mixture was prepared by mixing 100 parts by mass of aluminum nitride powder raw material with an average particle size of 1.0 $\mu$m and a specific surface area of 2.81 m$^2$/g, 5 parts by mass of aluminum nitride powder raw material with an average particle size of 3.0 $\mu$m and a specific surface area of 1.79 m$^2$/g, and 0.1 parts by mass of calcium fluoride as an additive.
The raw material mixture was placed in a heating device, nitrogen gas was supplied into the device to create a nitrogen atmosphere, and the raw material mixture was heated at 1800 °C for 20 hours. Heating was performed under normal pressure, followed by disintegrating and oxidation treatment, to obtain aluminum nitride powder (AL-4) with an average particle size of 7.0 $\mu$m and a specific surface area of 0.69 m$^2$/g. The results of various measurements on the aluminum nitride powder are shown in Table 1.

(Example 5)

A raw material mixture was prepared by mixing 100 parts by mass of aluminum nitride powder raw material with an average particle size of 1.0 $\mu$m and a specific surface area of 2.81 m$^2$/g and 5 parts by mass of aluminum nitride powder raw material with an average particle size of 3.2 $\mu$m and a specific surface area of 1.68 m$^2$/g.

The raw material mixture was placed in a heating device, nitrogen gas was supplied into the device to create a nitrogen atmosphere, and the raw material mixture was heated at 2100 °C for 1 hour. Heating was performed under normal pressure, followed by disintegrating and oxidation treatment, to obtain aluminum nitride powder (AL-5) with an average particle size of 7.1 $\mu$m and a specific surface area of 0.68 m$^2$/g. The results of various measurements on the aluminum nitride powder are shown in Table 1.

(Example 6)

A raw material mixture was prepared by mixing 100 parts by mass of aluminum nitride powder raw material with an average particle size of 1.0 $\mu$m and a specific surface area of 2.81 m$^2$/g, 5 parts by mass of aluminum nitride powder raw material with an average particle size of 3.0 $\mu$m and a specific surface area of 1.79 m$^2$/g, and 0.1 parts by mass of calcium carbonate as an additive.

The raw material mixture was placed in a heating device, nitrogen gas was supplied into the device to create a nitrogen atmosphere, and the raw material mixture was heated at 1800 °C for 20 hours. Heating was performed under normal pressure, followed by disintegrating and oxidation treatment, to obtain aluminum nitride powder (AL-6) with an average particle size of 7.1 $\mu$m and a specific surface area of 0.68 m$^2$/g. The results of various measurements on the aluminum nitride powder are shown in Table 1.

(Example 7)

A raw material mixture was prepared by mixing 100 parts by mass of aluminum nitride powder raw material with an average particle size of 1.0 $\mu$m and a specific surface area of 2.81 m$^2$/g, 5 parts by mass of aluminum nitride powder raw material with an average particle size of 3.0 $\mu$m and a specific surface area of 1.79 m$^2$/g, and 5.0 parts by mass of sulfur as an additive.

The raw material mixture was placed in a heating device, nitrogen gas was supplied into the device to create a nitrogen atmosphere, and the raw material mixture was heated at 1800 °C for 20 hours. Heating was performed under normal pressure, followed by disintegrating and oxidation treatment, to obtain aluminum nitride powder (AL-7) with an average particle size of 7.1 $\mu$m and a specific surface area of 0.68 m$^2$/g. The results of various measurements on the aluminum nitride powder are shown in Table 1.

(Example 8)

A raw material mixture was prepared by mixing 100 parts by mass of aluminum nitride powder raw material with an average particle size of 1.0 $\mu$m and a specific surface area of 2.81 m$^2$/g, 5 parts by mass of aluminum nitride powder raw material with an average particle size of 3.0 $\mu$m and a specific surface area of 1.79 m$^2$/g, and 0.1 parts by mass of cesium oxide as an additive.

The raw material mixture was placed in a heating device, nitrogen gas was supplied into the device to create a nitrogen atmosphere, and the raw material mixture was heated at 1800 °C for 20 hours. Heating was performed under normal pressure, followed by disintegrating and oxidation treatment, to obtain aluminum nitride powder (AL-8) with an average particle size of 7.2 $\mu$m and a specific surface area of 0.67 m$^2$/g. The results of various measurements on the aluminum nitride powder are shown in Table 1.

(Example 9)

A raw material mixture was prepared by mixing 100 parts by mass of aluminum nitride powder raw material with an average particle size of 1.0 $\mu$m and a specific surface area of 2.81 m$^2$/g, 5 parts by mass of aluminum nitride powder raw material with an average particle size of 3.0 $\mu$m and a specific surface area of 1.79 m$^2$/g, and 0.1 parts by mass of lanthanum oxide as an additive.

The raw material mixture was placed in a heating device, nitrogen gas was supplied into the device to create a nitrogen atmosphere, and the raw material mixture was heated at 1800 °C for 20 hours. Heating was performed under normal pressure, followed by disintegrating and oxidation treatment, to obtain aluminum nitride powder (AL-9) with an average particle size of 7.3 $\mu$m and a specific surface area of 0.66 m$^2$/g. The results of various measurements on the aluminum nitride powder are shown in Table 1.

(Example 10)

A raw material mixture was prepared by mixing 100 parts by mass of aluminum nitride powder raw material with an average particle size of 1.0 $\mu$m and a specific surface area of 2.81 m$^2$/g and 5 parts by mass of aluminum nitride powder raw material with an average particle size of 3.2 $\mu$m and a specific surface area of 1.68 m$^2$/g.
The raw material mixture was placed in a heating device, nitrogen gas was supplied into the device to create a nitrogen atmosphere, and the raw material mixture was heated at 2000 °C for 2 hours. Heating was performed under normal pressure, followed by disintegrating and oxidation treatment, to obtain aluminum nitride powder (AL-10) with an average particle size of 7.6 $\mu$m and a specific surface area of 0.63 m$^2$/g. The results of various measurements on the aluminum nitride powder are shown in Table 1.

(Example 11)

A raw material mixture was prepared by mixing 100 parts by mass of aluminum nitride powder raw material with an average particle size of 1.0 $\mu$m and a specific surface area of 2.81 m$^2$/g and 5 parts by mass of aluminum nitride powder raw material with an average particle size of 5.0 $\mu$m and a specific surface area of 1.02 m$^2$/g.
The raw material mixture was placed in a heating device, nitrogen gas was supplied into the device to create a nitrogen atmosphere, and the raw material mixture was heated at 1950 °C for 3 hours. Heating was performed under normal pressure, followed by disintegrating and oxidation treatment, to obtain aluminum nitride powder (AL-11) with an average particle size of 8.0 $\mu$m and a specific surface area of 0.60 m$^2$/g. The results of various measurements on the aluminum nitride powder are shown in Table 2.

(Example 12)

A raw material mixture was prepared by mixing 100 parts by mass of aluminum nitride powder raw material with an average particle size of 1.0 $\mu$m and a specific surface area of 2.81 m$^2$/g and 10 parts by mass of aluminum nitride powder raw material with an average particle size of 7.8 $\mu$m and a specific surface area of 0.62 m$^2$/g.
The raw material mixture was placed in a heating device, nitrogen gas was supplied into the device to create a nitrogen atmosphere, and the raw material mixture was heated at 1950 °C for 3 hours. Heating was performed under normal pressure, followed by disintegrating and oxidation treatment, to obtain aluminum nitride powder (AL-12) with an average particle size of 14.0 $\mu$m and a specific surface area of 0.27 m$^2$/g. The results of various measurements on the aluminum nitride powder are shown in Table 2.

(Example 13)

A raw material mixture was prepared by mixing 100 parts by mass of aluminum nitride powder raw material with an average particle size of 0.5 $\mu$m and a specific surface area of 15.70 m$^2$/g and 5 parts by mass of aluminum nitride powder raw material with an average particle size of 7.8 $\mu$m and a specific surface area of 0.62 m$^2$/g.
The raw material mixture was placed in a heating device, nitrogen gas was supplied into the device to create a nitrogen atmosphere, and the raw material mixture was heated at 1900 °C for 10 hours. Heating was performed under normal pressure, followed by disintegrating and oxidation treatment, to obtain aluminum nitride powder (AL-13) with an average particle size of 16.2 $\mu$m and a specific surface area of 0.23 m$^2$/g. The results of various measurements on the aluminum nitride powder are shown in Table 2.

(Example 14)

A raw material mixture was prepared by mixing 100 parts by mass of aluminum nitride powder raw material with an average particle size of 0.5 $\mu$m and a specific surface area of 15.70 m$^2$/g and 10 parts by mass of aluminum nitride powder raw material with an average particle size of 7.8 $\mu$m and a specific surface area of 0.62 m$^2$/g.
The raw material mixture was placed in a heating device, nitrogen gas was supplied into the device to create a nitrogen atmosphere, and was heated at 1950 °C for 5 hours. Heating was performed under normal pressure, followed by disintegrating and oxidation treatment, to obtain aluminum nitride powder (AL-14) with an average particle size of 16.6 $\mu$m and a specific surface area of 0.23 m$^2$/g. The results of various measurements on the aluminum nitride powder are shown in Table 2.

(Example 15)

A raw material mixture was prepared by mixing 100 parts by mass of aluminum nitride powder raw material with an average particle size of 0.5 $\mu$m and a specific surface area of 15.70 m$^2$/g and 20 parts by mass of aluminum nitride powder raw material with an average particle size of 10.2 $\mu$m and a specific surface area of 0.47 m$^2$/g.

The raw material mixture was placed in a heating device, nitrogen gas was supplied into the device to create a nitrogen atmosphere, and the raw material mixture was heated at 1850 °C for 20 hours. Heating was performed under normal pressure, followed by disintegrating and oxidation treatment, to obtain aluminum nitride powder (AL-15) with an average particle size of 17.2 $\mu$m and a specific surface area of 0.22 m$^2$/g. The results of various measurements on the aluminum nitride powder are shown in Table 2.

(Example 16)

A raw material mixture was prepared by mixing 100 parts by mass of aluminum nitride powder raw material with an average particle size of 1.0 $\mu$m and a specific surface area of 2.81 m$^2$/g and 10 parts by mass of aluminum nitride powder raw material with an average particle size of 7.8 $\mu$m and a specific surface area of 0.62 m$^2$/g.

The raw material mixture was placed in a heating device, nitrogen gas was supplied into the device to create a nitrogen atmosphere, and the raw material mixture was heated at 1900 °C for 10 hours. Heating was performed under normal pressure, followed by disintegrating and oxidation treatment, to obtain aluminum nitride powder (AL-16) with an average particle size of 17.8 $\mu$m and a specific surface area of 0.21 m$^2$/g. The results of various measurements on the aluminum nitride powder are shown in Table 2.

(Example 17)

A raw material mixture was prepared by mixing 100 parts by mass of aluminum nitride powder raw material with an average particle size of 0.5 $\mu$m and a specific surface area of 15.70 m$^2$/g, 5 parts by mass of aluminum nitride powder raw material with an average particle size of 10.2 $\mu$m and a specific surface area of 0.47 m$^2$/g, and 0.1 parts by mass of yttrium oxide as an additive.

The raw material mixture was placed in a heating device, nitrogen gas was supplied into the device to create a nitrogen atmosphere, and the raw material mixture was heated at 1850 °C for 10 hours. Heating was performed under normal pressure, followed by disintegrating and oxidation treatment, to obtain aluminum nitride powder (AL-17) with an average particle size of 17.8 $\mu$m and a specific surface area of 0.21 m$^2$/g. The results of various measurements on the aluminum nitride powder are shown in Table 2.

(Example 18)

A raw material mixture was prepared by mixing 100 parts by mass of aluminum nitride powder raw material with an average particle size of 0.5 $\mu$m and a specific surface area of 15.70 m$^2$/g, 5 parts by mass of aluminum nitride powder raw material with an average particle size of 10.2 $\mu$m and a specific surface area of 0.47 m$^2$/g, and 0.1 parts by mass of calcium fluoride as an additive.

The raw material mixture was placed in a heating device, nitrogen gas was supplied into the device to create a nitrogen atmosphere, and the raw material mixture was heated at 1850 °C for 10 hours. Heating was performed under normal pressure, followed by disintegrating and oxidation treatment, to obtain aluminum nitride powder (AL-18) with an average particle size of 18.1 $\mu$m and a specific surface area of 0.21 m$^2$/g. The results of various measurements on the aluminum nitride powder are shown in Table 2.

(Example 19)

A raw material mixture was prepared by mixing 100 parts by mass of aluminum nitride powder raw material with an average particle size of 0.5 $\mu$m and a specific surface area of 15.70 m$^2$/g, 5 parts by mass of aluminum nitride powder raw material with an average particle size of 10.2 $\mu$m and a specific surface area of 0.47 m$^2$/g, and 5 parts by mass of calcium fluoride as an additive.

The raw material mixture was placed in a heating device, nitrogen gas was supplied into the device to create a nitrogen atmosphere, and the raw material mixture was heated at 1850 °C for 10 hours. Heating was performed under normal pressure, followed by disintegrating and oxidation treatment, to obtain aluminum nitride powder (AL-19) with an average particle size of 18.2 $\mu$m and a specific surface area of 0.21 m$^2$/g. The results of various measurements on the aluminum nitride powder are shown in Table 2.

(Example 20)

A raw material mixture was prepared by mixing 100 parts by mass of aluminum nitride powder raw material with an average particle size of 0.5 $\mu$m and a specific surface area of 15.70 m$^2$/g, 5 parts by mass of aluminum nitride powder raw material with an average particle size of 10.2 $\mu$m and a specific surface area of 0.47 m$^2$/g, and 0.1 parts by mass of cesium oxide as an additive.

The raw material mixture was placed in a heating device, nitrogen gas was supplied into the device to create a nitrogen atmosphere, and the raw material mixture was heated at 1850 °C for 10 hours. Heating was performed under normal pressure, followed by disintegrating and oxidation treatment, to obtain aluminum nitride powder (AL-20) with an average particle size of 18.3 $\mu$m and a specific surface area of 0.21 m$^2$/g. The results of various measurements on the aluminum nitride powder are shown in Table 2.

(Example 21)

A raw material mixture was prepared by mixing 100 parts by mass of aluminum nitride powder raw material with an average particle size of 0.5 $\mu$m and a specific surface area of 15.70 m$^2$/g, 5 parts by mass of aluminum nitride powder raw material with an average particle size of 10.2 $\mu$m and a specific surface area of 0.47 m$^2$/g, and 0.1 parts by mass of calcium carbonate as an additive.

The raw material mixture was placed in a heating device, nitrogen gas was supplied into the device to create a nitrogen atmosphere, and the raw material mixture was heated at 1850 °C for 10 hours. Heating was performed under normal pressure, followed by disintegrating and oxidation treatment, to obtain aluminum nitride powder (AL-21) with an average particle size of 18.5 $\mu$m and a specific surface area of 0.21 m$^2$/g. The results of various measurements on the aluminum nitride powder are shown in Table 3.

(Example 22)

A raw material mixture was prepared by mixing 100 parts by mass of aluminum nitride powder raw material with an average particle size of 0.5 $\mu$m and a specific surface area of 15.70 m$^2$/g, 5 parts by mass of aluminum nitride powder raw material with an average particle size of 10.2 $\mu$m and a specific surface area of 0.47 m$^2$/g, and 0.1 parts by mass of lanthanum oxide as an additive.

The raw material mixture was placed in a heating device, nitrogen gas was supplied into the device to create a nitrogen atmosphere, and the raw material mixture was heated at 1850 °C for 10 hours. Heating was performed under normal pressure, followed by disintegrating and oxidation treatment, to obtain aluminum nitride powder (AL-22) with an average particle size of 18.5 $\mu$m and a specific surface area of 0.21 m$^2$/g. The results of various measurements on the aluminum nitride powder are shown in Table 3.

(Example 23)

A raw material mixture was prepared by mixing 100 parts by mass of aluminum nitride powder raw material with an average particle size of 0.5 $\mu$m and a specific surface area of 15.70 m$^2$/g and 10 parts by mass of aluminum nitride powder raw material with an average particle size of 7.8 $\mu$m and a specific surface area of 0.62 m$^2$/g.

The raw material mixture was placed in a heating device, nitrogen gas was supplied into the device to create a nitrogen atmosphere, and the raw material mixture was heated at 2000 °C for 5 hours. Heating was performed under normal pressure, followed by disintegrating and oxidation treatment, to obtain aluminum nitride powder (AL-23) with an average particle size of 18.7 $\mu$m and a specific surface area of 0.20 m$^2$/g. The results of various measurements on the aluminum nitride powder are shown in Table 3.

(Example 24)

A raw material mixture was prepared by mixing 100 parts by mass of aluminum nitride powder raw material with an average particle size of 0.5 $\mu$m and a specific surface area of 15.70 m$^2$/g, 5 parts by mass of aluminum nitride powder raw material with an average particle size of 16.2 $\mu$m and a specific surface area of 0.23 m$^2$/g, and 0.1 parts by mass of calcium fluoride as an additive.

The raw material mixture was placed in a heating device, nitrogen gas was supplied into the device to create a nitrogen atmosphere, and the raw material mixture was heated at 1900 °C for 18 hours. Heating was performed under normal pressure, followed by disintegrating and oxidation treatment, to obtain aluminum nitride powder (AL-24) with an average particle size of 26.3 $\mu$m and a specific surface area of 0.19 m$^2$/g. The results of various measurements on the aluminum nitride powder are shown in Table 3.

(Example 25)

A raw material mixture was prepared by mixing 100 parts by mass of aluminum nitride powder raw material with an average particle size of 0.5 $\mu$m and a specific surface area of 15.70 m$^2$/g, 5 parts by mass of aluminum nitride powder raw material with an average particle size of 16.2 $\mu$m and a specific surface area of 0.23 m$^2$/g, and 0.1 parts by mass of lanthanum oxide as an additive.

The raw material mixture was placed in a heating device, nitrogen gas was supplied into the device to create a nitrogen atmosphere, and the raw material mixture was heated at 1900 °C for 18 hours. Heating was performed under normal pressure, followed by disintegrating and oxidation treatment, to obtain aluminum nitride powder (AL-25) with an average particle size of 26.5 $\mu$m and a specific surface area of 0.19 m$^2$/g. The results of various measurements on the aluminum nitride powder are shown in Table 3.

(Example 26)

A raw material mixture was prepared by mixing 100 parts by mass of aluminum nitride powder raw material with an average particle size of 1.0 $\mu$m and a specific surface area of 2.81 m$^2$/g and 5 parts by mass of aluminum nitride powder raw material with an average particle size of 18.7 $\mu$m and a specific surface area of 0.20 m$^2$/g.

The raw material mixture was placed in a heating device, nitrogen gas was supplied into the device to create a nitrogen atmosphere, and the raw material mixture was heated at 2000 °C for 8 hours. Heating was performed under normal pressure, followed by disintegrating and oxidation treatment, to obtain aluminum nitride powder (AL-26) with an average particle size of 28.8 $\mu$m and a specific surface area of 0.17 m$^2$/g. The results of various measurements on the aluminum nitride powder are shown in Table 3, and SEM observation was shown in Figure 2.

(Example 27)

A raw material mixture was prepared by mixing 100 parts by mass of aluminum nitride powder raw material with an average particle size of 0.5 $\mu$m and a specific surface area of 15.70 m$^2$/g and 15 parts by mass of aluminum nitride powder raw material with an average particle size of 18.2 $\mu$m and a specific surface area of 0.21 m$^2$/g.

The raw material mixture was placed in a heating device, nitrogen gas was supplied into the device to create a nitrogen atmosphere, and the raw material mixture was heated at 1900 °C for 20 hours. Heating was performed under normal pressure, followed by disintegrating and oxidation treatment, to obtain aluminum nitride powder (AL-27) with an average particle size of 28.8 $\mu$m and a specific surface area of 0.17 m$^2$/g. The results of various measurements on the aluminum nitride powder are shown in Table 3.

(Example 28)

A raw material mixture was prepared by mixing 100 parts by mass of aluminum nitride powder raw material with an average particle size of 1.0 $\mu$m and a specific surface area of 2.81 m$^2$/g and 20 parts by mass of aluminum nitride powder raw material with an average particle size of 17.8 $\mu$m and a specific surface area of 0.21 m$^2$/g.

The raw material mixture was placed in a heating device, nitrogen gas was supplied into the device to create a nitrogen atmosphere, and the raw material mixture was heated at 1950 °C for 10 hours. Heating was performed under normal pressure, followed by disintegrating and oxidation treatment, to obtain aluminum nitride powder (AL-28) with an average particle size of 29.4 $\mu$m and a specific surface area of 0.17 m$^2$/g. The results of various measurements on the aluminum nitride powder are shown in Table 3.

(Example 29)

A raw material mixture was prepared by mixing 100 parts by mass of aluminum nitride powder raw material with an average particle size of 0.5 $\mu$m and a specific surface area of 15.70 m$^2$/g and 10 parts by mass of aluminum nitride powder raw material with an average particle size of 26.5 $\mu$m and a specific surface area of 0.14 m$^2$/g.

The raw material mixture was placed in a heating device, nitrogen gas was supplied into the device to create a nitrogen atmosphere, and the raw material mixture was heated at 1950 °C for 12 hours. Heating was performed under normal pressure, followed by disintegrating and oxidation treatment, to obtain aluminum nitride powder (AL-29) with an average particle size of 38.2 $\mu$m and a specific surface area of 0.11 m$^2$/g. The results of various measurements on the aluminum nitride powder are shown in Table 3.

(Example 30)

A raw material mixture was prepared by mixing 100 parts by mass of aluminum nitride powder raw material with an average particle size of 3.0 $\mu$m and a specific surface area of 1.79 m$^2$/g and 10 parts by mass of aluminum nitride powder raw material with an average particle size of 28.8 $\mu$m and a specific surface area of 0.13 m$^2$/g.

The raw material mixture was placed in a heating device, nitrogen gas was supplied into the device to create a nitrogen atmosphere, and the raw material mixture was heated at 1950 °C for 20 hours. Heating was performed under normal pressure, followed by disintegrating and oxidation treatment, to obtain aluminum nitride powder (AL-30) with an average particle size of 39.0 $\mu$m and a specific surface area of 0.10 m$^2$/g. The results of various measurements on the aluminum nitride powder are shown in Table 4.

(Example 31)

A raw material mixture was prepared by mixing 100 parts by mass of aluminum nitride powder raw material with an average particle size of 4.7 $\mu$m and a specific surface area of 1.22 m$^2$/g and 10 parts by mass of aluminum nitride powder raw material with an average particle size of 38.2 $\mu$m and a specific surface area of 0.10 m$^2$/g.

The raw material mixture was placed in a heating device, nitrogen gas was supplied into the device to create a nitrogen atmosphere, and was heated at 1950 °C for 20 hours. Heating was performed under normal pressure, followed by disintegrating and oxidation treatment, to obtain aluminum nitride powder (AL-31) with an average particle size of 44.0 $\mu$m and a specific surface area of 0.09 m$^2$/g. The results of various measurements on the aluminum nitride powder are shown in Table 4.

(Example 32)

A raw material mixture was prepared by mixing 100 parts by mass of aluminum nitride powder raw material with an average particle size of 1.0 $\mu$m and a specific surface area of 2.81 m$^2$/g and 15 parts by mass of aluminum nitride powder raw material with an average particle size of 26.4 $\mu$m and a specific surface area of 0.14 m$^2$/g.

The raw material mixture was placed in a heating device, nitrogen gas was supplied into the device to create a nitrogen atmosphere, and was heated at 2100 °C for 14 hours. Heating was performed under normal pressure, followed by disintegrating and oxidation treatment, to obtain aluminum nitride powder (AL-32) with an average particle size of 49.4 $\mu$m and a specific surface area of 0.05 m$^2$/g. The results of various measurements on the aluminum nitride powder are shown in Table 4.

(Comparative Example 1)

Only the aluminum nitride powder with an average particle size of 1.0 $\mu$m and a specific surface area of 2.81 m$^2$/g was placed in a heating device, nitrogen gas was supplied into the device to create a nitrogen atmosphere, and the powder was heated at 1900 °C for 10 hours. The heating was performed under normal pressure, followed by disintegrating and oxidation treatment to obtain aluminum nitride powder.

The resulting aluminum nitride powder contained approximately 10% particles with relatively flat surfaces along their contours, but the average particle size was as small as 2.2 $\mu$m. Furthermore, when the smoothness of the above-described flat surface was evaluated, the smoothness was found to be poor. The results of various measurements on the aluminum nitride powder are shown in Table 4.

(Comparative Example 2)

A raw material mixture was prepared by mixing 100 parts by mass of aluminum nitride powder raw material with an average particle size of 2.0 $\mu$m and a specific surface area of 1.93 m$^2$/g and 10 parts by mass of aluminum nitride powder raw material with an average particle size of 3.0 $\mu$m and a specific surface area of 1.79 m$^2$/g.

The raw material mixture was placed in a heating device, nitrogen gas was supplied into the device to create a nitrogen atmosphere, and the raw material mixture was heated at 1850 °C for 10 hours. The heating was performed under normal pressure, followed by disintegrating and oxidation treatment to obtain aluminum nitride powder.

The resulting aluminum nitride powder contained approximately 40% particles with relatively flat surfaces along their contours, but the average particle size was as small as 3.2 $\mu$m. Furthermore, when the smoothness of the above flat surface was evaluated, the smoothness was found to be poor. The results of various measurements on the aluminum nitride powder are shown in Table 4.

(Comparative Example 3)

A raw material mixture was prepared by mixing 100 parts by mass of aluminum nitride powder raw material with an average particle size of 1.0 $\mu$m and a specific surface area of 2.81 m$^2$/g and 50 parts by mass of aluminum nitride powder raw material with an average particle size of 3.0 $\mu$m and a specific surface area of 1.79 m$^2$/g.

The raw material mixture was placed in a heating device, nitrogen gas was supplied into the device to create a nitrogen atmosphere, and the raw material mixture was heated at 1850 °C for 10 hours. The heating was performed under normal pressure, followed by disintegrating and oxidation treatment to obtain aluminum nitride powder.

The resulting aluminum nitride powder contained approximately 50% particles with relatively flat surfaces along their contours, but the average particle size was as small as 3.7 $\mu$m. Furthermore, when the smoothness of the above flat surface was evaluated, when the smoothness of the above flat surface was evaluated, the smoothness was found to be poor. The results of various measurements on the aluminum nitride powder are shown in Table 4.

(Comparative Example 4)

A raw material mixture was prepared by mixing aluminum powder with an average particle size of 7.5 $\mu$m and aluminum nitride powder with an average particle size of 1.0 $\mu$m and a specific surface area of 2.8 m$^2$/g, in a ratio of 1:2. This raw material mixture was placed in a reactor and subjected to a combustion reaction under nitrogen pressure, and the resulting bulk material were disintegrated to obtain aluminum nitride powder.

The average particle size of the obtained aluminum nitride powder was 19.2 $\mu$m. Among the particles that constitute the above-described aluminum nitride powder, the proportion of particles having surfaces with relatively flat contours was approximately 20%. When the smoothness of these above flat surfaces was evaluated for the above-described particles, the smoothness was found to be poor. Thus, in Comparative Example 4, the specific aluminum nitride powder containing polyhedral particles having at least two smooth surfaces as defined in the present invention was not obtained. The results of various measurements on the aluminum nitride powder are shown in Table 4.

Table 1

| | | Example 1 | Example 2 | Example 3 | Example 4 | Example 5 |
|---|---|---|---|---|---|---|
| Raw material | First AIN powder raw material Average particle size (μm) | 0.5 | 1.0 | 1.0 | 1.0 | 1.0 |
| | First AIN powder raw material Specific surface area SA1 (m$^2$/g) | 15.7 | 2.81 | 2.81 | 2.81 | 2.81 |
| | Second AIN powder raw material Average particle size (μm) | 3.2 | 3.0 | 3.0 | 3.0 | 3.2 |
| | Second AIN powder raw material Specific surface area SA2 (m$^2$/g) | 1.68 | 1.79 | 1.79 | 1.79 | 1.68 |
| | SA2/SA1 | 0.11 | 0.64 | 0.64 | 0.64 | 0.60 |
| | Mixing amount of First/Second AIN powder raw material (parts by mass/parts by mass) | 100/1 | 100/5 | 100/5 | 100/5 | 100/5 |
| Aluminum nitride powder | Average particle size (D50) (μm) | 5.0 | 6.9 | 7.0 | 7.0 | 7.1 |
| | Specific surface area (m$^2$/g) | 0.96 | 0.70 | 0.69 | 0.69 | 0.68 |
| | Proportion of polyhedral particles (%) | 79 | 75 | 71 | 72 | 76 |
| | Ratio (L/D) of Major axis (L) to Minor axis (D) | 1.31 | 1.34 | 1.36 | 1.33 | 1.29 |
| | Smoothness evaluation $M_{max}$ (μm) | 0.29 | 0.29 | 0.25 | 0.25 | 0.24 |
| | Smoothness evaluation $M_A$ (μm) | 0.10 | 0.07 | 0.08 | 0.09 | 0.08 |
| | Oxygen content (% by mass) | 0.42 | 0.39 | 0.41 | 0.37 | 0.31 |
| | Thermal conductivity of Aluminum nitride powder (W/m·k) | 140 | 130 | 130 | 130 | 140 |
| | Thermal conductivity of Resin composition (W/m·k) | 7 | 7 | 7 | 7 | 7 |
| | Fluidity of Resin composition (g/min) | 31 | 22 | 21 | 24 | 27 |

Table 1 (continued)

| | | Example 6 | Example 7 | Example 8 | Example 9 | Example 10 |
|---|---|---|---|---|---|---|
| Raw material | First AlN powder raw material Average particle size (μm) | 1.0 | 1.0 | 1.0 | 1.0 | 1.0 |
| | First AlN powder raw material Specific surface area SA1 (m$^2$/g) | 2.81 | 2.81 | 2.81 | 2.81 | 2.81 |
| | Second AlN powder raw material Average particle size (μm) | 3.0 | 3.0 | 3.0 | 3.0 | 3.2 |
| | Second AlN powder raw material Specific surface area SA2 (m$^2$/g) | 1.79 | 1.79 | 1.79 | 1.79 | 1.68 |
| | SA2/SA1 | 0.64 | 0.64 | 0.64 | 0.64 | 0.60 |
| | Mixing amount of First/Second AlN powder raw material (parts by mass/parts by mass) | 100/5 | 100/5 | 100/5 | 100/5 | 100/5 |
| Aluminum nitride powder | Average particle size (D50) (μm) | 7.1 | 7.1 | 7.2 | 7.3 | 7.6 |
| | Specific surface area (m$^2$/g) | 0.68 | 0.68 | 0.67 | 0.66 | 0.63 |
| | Proportion of polyhedral particles (%) | 74 | 71 | 75 | 74 | 75 |
| | Ratio (L/D) of Major axis (L) to Minor axis (D) | 1.31 | 1.32 | 1.28 | 1.29 | 1.29 |
| | Smoothness evaluation M$_{max}$ (μm) | 0.24 | 0.23 | 0.22 | 0.23 | 0.22 |
| | Smoothness evaluation M$_A$ (μm) | 0.09 | 0.07 | 0.10 | 0.08 | 0.07 |
| | Oxygen content (% by mass) | 0.38 | 0.39 | 0.42 | 0.40 | 0.34 |
| | Thermal conductivity of Aluminum nitride powder (W/m·k) | 130 | 120 | 130 | 130 | 140 |
| | Thermal conductivity of Resin composition (W/m·k) | 7 | 7 | 7 | 7 | 7 |
| | Fluidity of Resin composition (g/min) | 27 | 20 | 26 | 26 | 29 |

Table 2

| | | | Example 11 | Example 12 | Example 13 | Example 14 | Example 15 |
|---|---|---|---|---|---|---|---|
| Raw material | | First AlN powder raw material Average particle size (μm) | 1.0 | 1.0 | 0.5 | 0.5 | 0.5 |
| | | First AlN powder raw material Specific surface area SA1 ($m^2$/g) | 2.81 | 2.81 | 15.7 | 15.7 | 15.7 |
| | | Second AlN powder raw material Average particle size (μm) | 5.0 | 7.8 | 7.8 | 7.8 | 10.2 |
| | | Second AlN powder raw material Specific surface area SA2 ($m^2$/g) | 1.02 | 0.62 | 0.62 | 0.62 | 0.47 |
| | | SA2/SA1 | 0.36 | 0.22 | 0.04 | 0.04 | 0.03 |
| | | Mixing amount of First/Second AlN powder raw material (parts by mass/parts by mass) | 100/5 | 100/10 | 100/5 | 100/10 | 100/20 |
| Aluminum nitride powder | | Average particle size (D50) (μm) | 8.0 | 14.0 | 16.2 | 16.6 | 17.2 |
| | | Specific surface area ($m^2$/g) | 0.60 | 0.27 | 0.23 | 0.23 | 0.22 |
| | | Proportion of polyhedral particles (%) | 73 | 77 | 79 | 79 | 78 |
| | | Ratio (L/D) of Major axis (L) to Minor axis (D) | 1.30 | 1.25 | 1.23 | 1.29 | 1.30 |
| | | Smoothness evaluation $M_{max}$ (μm) | 0.22 | 0.19 | 0.18 | 0.18 | 0.16 |
| | | Smoothness evaluation $M_A$ (μm) | 0.10 | 0.05 | 0.05 | 0.06 | 0.04 |
| | | Oxygen content (% by mass) | 0.32 | 0.26 | 0.24 | 0.22 | 0.20 |
| | | Thermal conductivity of Aluminum nitride powder (W/m·k) | 140 | 160 | 160 | 150 | 150 |
| | | Thermal conductivity of Resin composition (W/m·k) | 7 | 8 | 8 | 8 | 8 |
| | | Fluidity of Resin composition (g/min) | 22 | 37 | 44 | 47 | 43 |

Table 2 (continued)

| | | Example 16 | Example 17 | Example 18 | Example 19 | Example 20 |
|---|---|---|---|---|---|---|
| Raw material | First AlN powder raw material Average particle size (μm) | 1.0 | 0.5 | 0.5 | 0.5 | 0.5 |
| | First AlN powder raw material Specific surface area SA1 ($m^2$/g) | 2.81 | 15.7 | 15.7 | 15.7 | 15.7 |
| | Second AlN powder raw material Average particle size (μm) | 7.8 | 10.2 | 10.2 | 10.2 | 10.2 |
| | Second AlN powder raw material Specific surface area SA2 ($m^2$/g) | 0.62 | 0.47 | 0.47 | 0.47 | 0.47 |
| | SA2/SA1 | 0.22 | 0.03 | 0.03 | 0.03 | 0.03 |
| | Mixing amount of First/Second AlN powder raw material (parts by mass/parts by mass) | 100/10 | 100/5 | 100/5 | 100/5 | 100/5 |
| Aluminum nitride powder | Average particle size (D50) (μm) | 17.8 | 17.8 | 18.1 | 18.2 | 18.3 |
| | Specific surface area ($m^2$/g) | 0.21 | 0.21 | 0.21 | 0.21 | 0.21 |
| | Proportion of polyhedral particles (%) | 80 | 76 | 78 | 76 | 78 |
| | Ratio (L/D) of Major axis (L) to Minor axis (D) | 1.28 | 1.26 | 1.26 | 1.30 | 1.29 |
| | Smoothness evaluation $M_{max}$ (μm) | 0.17 | 0.16 | 0.17 | 0.16 | 0.18 |
| | Smoothness evaluation $M_A$ (μm) | 0.05 | 0.08 | 0.09 | 0.06 | 0.05 |
| | Oxygen content (% by mass) | 0.16 | 0.22 | 0.16 | 0.19 | 0.18 |
| | Thermal conductivity of Aluminum nitride powder (W/m·k) | 170 | 160 | 170 | 150 | 160 |
| | Thermal conductivity of Resin composition (W/m·k) | 9 | 8 | 9 | 8 | 8 |
| | Fluidity of Resin composition (g/min) | 62 | 49 | 59 | 53 | 52 |

Table 3

| | | Example 21 | Example 22 | Example 23 | Example 24 | Example 25 |
|---|---|---|---|---|---|---|
| Raw material | First AIN powder raw material Average particle size (μm) | 0.5 | 0.5 | 0.5 | 0.5 | 0.5 |
| | First AIN powder raw material Specific surface area SA1 (m²/g) | 15.7 | 15.7 | 15.7 | 15.7 | 15.7 |
| | Second AIN powder raw material Average particle size (μm) | 10.2 | 10.2 | 7.8 | 16.2 | 16.2 |
| | Second AIN powder raw material Specific surface area SA2 (m²/g) | 0.47 | 0.47 | 0.62 | 0.23 | 0.23 |
| | SA2/SA1 | 0.03 | 0.03 | 0.04 | 0.01 | 0.01 |
| | Mixing amount of First/Second AIN powder raw material (parts by mass/parts by mass) | 100/5 | 100/5 | 100/10 | 100/5 | 100/5 |
| Aluminum nitride powder | Average particle size (D50) (μm) | 18.5 | 18.5 | 18.7 | 26.3 | 26.5 |
| | Specific surface area (m²/g) | 0.21 | 0.21 | 0.20 | 0.19 | 0.19 |
| | Proportion of polyhedral particles (%) | 78 | 76 | 80 | 82 | 81 |
| | Ratio (L/D) of Major axis (L) to Minor axis (D) | 1.27 | 1.25 | 1.21 | 1.23 | 1.18 |
| | Smoothness evaluation $M_{max}$ (μm) | 0.18 | 0.14 | 0.17 | 0.16 | 0.18 |
| | Smoothness evaluation $M_A$ (μm) | 0.08 | 0.07 | 0.05 | 0.07 | 0.06 |
| | Oxygen content (% by mass) | 0.19 | 0.19 | 0.14 | 0.11 | 0.13 |
| | Thermal conductivity of Aluminum nitride powder (W/m·k) | 150 | 160 | 170 | 180 | 180 |
| | Thermal conductivity of Resin composition (W/m·k) | 8 | 8 | 9 | 10 | 10 |
| | Fluidity of Resin composition (g/min) | 48 | 51 | 48 | 52 | 59 |

Table 3 (continued)

| | | Example 26 | Example 27 | Example 28 | Example 29 |
|---|---|---|---|---|---|
| Raw material | First AIN powder raw material Average particle size (μm) | 1.0 | 0.5 | 1.0 | 0.5 |
| | First AIN powder raw material Specific surface area SA1 (m²/g) | 2.81 | 15.7 | 2.81 | 15.7 |
| | Second AIN powder raw material Average particle size (μm) | 18.7 | 18.2 | 17.8 | 26.5 |
| | Second AIN powder raw material Specific surface area SA2 (m²/g) | 0.2 | 0.21 | 0.21 | 0.14 |
| | SA2/SA1 | 0.07 | 0.01 | 0.07 | 0.01 |
| | Mixing amount of First/Second AIN powder raw material (parts by mass/parts by mass) | 100/5 | 100/15 | 100/20 | 100/10 |
| Aluminum nitride powder | Average particle size (D50) (μm) | 28.8 | 28.8 | 29.4 | 38.2 |
| | Specific surface area (m²/g) | 0.17 | 0.17 | 0.17 | 0.11 |
| | Proportion of polyhedral particles (%) | 84 | 89 | 91 | 87 |
| | Ratio (L/D) of Major axis (L) to Minor axis (D) | 1.16 | 1.14 | 1.19 | 1.21 |
| | Smoothness evaluation $M_{max}$ (μm) | 0.18 | 0.13 | 0.16 | 0.13 |
| | Smoothness evaluation $M_A$ (μm) | 0.07 | 0.04 | 0.06 | 0.07 |
| | Oxygen content (% by mass) | 0.10 | 0.10 | 0.13 | 0.11 |
| | Thermal conductivity of Aluminum nitride powder (W/m·k) | 190 | 190 | 180 | 190 |
| | Thermal conductivity of Resin composition (W/m·k) | 11 | 11 | 10 | 11 |
| | Fluidity of Resin composition (g/min) | 62 | 58 | 64 | 52 |

Table 4

| | | Example 30 | Example 31 | Example 32 |
|---|---|---|---|---|
| Raw material | First AlN powder raw material Average particle size (μm) | 3.0 | 4.7 | 1.0 |
| | First AlN powder raw material Specific surface area SA1 (m²/g) | 1.79 | 1.22 | 2.81 |
| | Second AlN powder raw material Average particle size (μm) | 28.8 | 38.2 | 26.4 |
| | Second AlN powder raw material Specific surface area SA2 (m²/g) | 0.13 | 0.1 | 0.14 |
| | SA2/SA1 | 0.07 | 0.08 | 0.05 |
| | Mixing amount of First/Second AlN powder raw material (parts by mass/parts by mass) | 100/10 | 100/10 | 100/15 |
| Aluminum nitride powder | Average particle size (D50) (μm) | 39.0 | 44.0 | 49.4 |
| | Specific surface area (m²/g) | 0.10 | 0.09 | 0.05 |
| | Proportion of polyhedral particles (%) | 85 | 88 | 92 |
| | Ratio (L/D) of Major axis (L) to Minor axis (D) | 1.18 | 1.17 | 1.09 |
| | Smoothness evaluation $M_{max}$ (μm) | 0.15 | 0.13 | 0.17 |
| | Smoothness evaluation $M_A$ (μm) | 0.09 | 0.06 | 0.07 |
| | Oxygen content (% by mass) | 0.12 | 0.08 | 0.06 |
| | Thermal conductivity of Aluminum nitride powder (W/m·k) | 180 | 180 | 180 |
| | Thermal conductivity of Resin composition (W/m·k) | 10 | 10 | 10 |
| | Fluidity of Resin composition (g/min) | 41 | 48 | 53 |

*Proportion of particles having surfaces with relatively flat contours

Table 4 (continued)

| | | Comparative Example 1 | Comparative Example 2 | Comparative Example 3 | Comparative Example 4 |
|---|---|---|---|---|---|
| Raw material | First AlN powder raw material Average particle size (μm) | 1.0 | 2.0 | 1.0 | 1.0 |
| | First AlN powder raw material Specific surface area SA1 ($m^2$/g) | 2.81 | 1.93 | 2.81 | 2.8 |
| | Second AlN powder raw material Average particle size (μm) | - | 3.0 | 3.0 | Aluminum powder having average particle size of 7.5 μm |
| | Second AlN powder raw material Specific surface area SA2 ($m^2$/g) | - | 1.79 | 1.79 | |
| | SA2/SA1 | - | 0.93 | 0.64 | - |
| | Mixing amount of First/Second AlN powder raw material (parts by mass/parts by mass) | - | 100/10 | 100/50 | - |
| Aluminum nitride powder | Average particle size (D50) (μm) | 2.2 | 3.2 | 3.7 | 19.2 |
| | Specific surface area ($m^2$/g) | 2.18 | 1.64 | 1.45 | 0.43 |
| | Proportion of polyhedral particles (%) | 13 | 43* | 49* | 21* |
| | Ratio (L/D) of Major axis (L) to Minor axis (D) | 1.21 | 1.26 | 1.24 | 1.36 |
| | Smoothness evaluation $M_{max}$ (μm) | 0.39 | 0.31 | 0.33 | 0.42 |
| | Smoothness evaluation $M_A$ (μm) | 0.22 | 0.20 | 0.24 | 0.34 |
| | Oxygen content (% by mass) | 0.32 | 0.36 | 0.35 | 0.22 |
| | Thermal conductivity of Aluminum nitride powder (W/m·k) | 140 | 140 | 150 | 150 |
| | Thermal conductivity of Resin composition (W/m·k) | 4 | 4 | 5 | 5 |
| | Fluidity of Resin composition (g/min) | 17 | 19 | 15 | 11 |

*Proportion of particles having surfaces with relatively flat contours

In each Example, aluminum nitride powder with an average particle size in a range of 5 to 50 μm was obtained. This aluminum nitride powder contained polyhedral particles with at least two smooth surfaces and a specific major axis/minor axis ratio, as well as a sufficiently low oxygen concentration, resulting in high thermal conductivity. It was also found that the resin compositions in which the aluminum nitride powder of each Example was filled into the resin had high thermal conductivity and excellent fluidity, and were useful as heat dissipation materials.

Reference Signs List

[0178]

　　11, 12 Polyhedral particles

a smooth surface

**Claims**

1. An aluminum nitride powder having an average particle size of 5 to 50 $\mu$m and an oxygen content of 0.5 % by mass or less, comprising:

   polyhedral particles having at least two smooth surfaces under observation with a scanning electron microscope at 500x magnification,
   wherein in a SEM image at 2000x of the cross-section of the particles, for 10 arbitrarily selected particles, the maximum value of the perpendicular distance between the outer line corresponding to the smooth surface and a straight line connecting the ends of the outer line is denoted as M, and among the measured values of M for each of the 10 selected particles, the largest value $M_{max}$ is 0.3 $\mu$m or less, and
   wherein for the polyhedral particles with a major axis (L) of 5 $\mu$m or more, the average value of the ratio (L/D) of the major axis (L) to the minor axis (D) is within the range of 1.0 to 1.4.

2. The aluminum nitride powder according to claim 1,
   wherein the proportion of the polyhedral particles is 70 % or more.

3. The aluminum nitride powder according to claim 1,
   wherein in a SEM image at 2000x of a cross-section of the polyhedral particles, for 10 particles arbitrarily selected, the average value ($M_A$) of the maximum value M of the perpendicular distance between the outer line corresponding to the smooth surface and the straight line connecting the ends of the outer line is 0.15 $\mu$m or less.

4. The aluminum nitride powder according to any one of claims 1 to 3, used for resin filling.

5. A resin composition comprising the aluminum nitride powder according to claim 1 or 2, and a resin.

6. A method for producing an aluminum nitride powder according to any one of claims 1 to 3 comprising:

   a step 1 of mixing 100 parts by mass of a first aluminum nitride powder raw material having an average particle size of 0.5 to 5 $\mu$m and a specific surface area of 1.2 to 16.0 $m^2$/g with 1 to 20 parts by mass of a second aluminum nitride powder raw material having an average particle size of 3 to 40 $\mu$m, a specific surface area of 0.05 to 1.8 $m^2$/g, and a ratio (SA2/SA1) of the specific surface area (SA2) of the second aluminum nitride powder raw material relative to the specific surface area (SA1) of the first aluminum nitride powder raw material of 0.8 or less, to prepare a raw material mixture; and
   a step 2 of heating the raw material mixture to 1750 to 2100 °C while supplying an inert gas.

**Patentansprüche**

1. Aluminiumnitridpulver mit einer durchschnittlichen Partikelgröße von 5 bis 50 $\mu$m und einem Sauerstoffgehalt von 0,5 Massen-% oder weniger, umfassend:

   polyedrische Partikel mit mindestens zwei glatten Oberflächen, die bei einer 500-fachen Vergrößerung unter einem Rasterelektronenmikroskop zu erkennen sind,
   wobei in einem Rasterelektronenmikroskop-Bild (SEM-Bild) mit 2000-facher Vergrößerung des Querschnitts der Partikel für 10 willkürlich ausgewählte Partikel der Maximalwert des senkrechten Abstands zwischen der der glatten Oberfläche entsprechenden Außenlinie und einer die Enden der Außenlinie verbindenden Geraden als M bezeichnet wird und unter den Messwerten von M für jedes der 10 ausgewählten Partikel der größte Wert $M_{max}$ 0,3 $\mu$m oder weniger beträgt, und
   wobei bei den polyedrischen Partikeln mit einer längsten Achse (L) von 5 $\mu$m oder mehr der Durchschnittswert des Verhältnisses (L/D) der längsten Achse (L) zur kürzesten Achse (D) im Bereich von 1,0 bis 1,4 liegt.

2. Aluminiumnitridpulver nach Anspruch 1,
   wobei der Anteil der polyedrischen Partikel 70 % oder mehr beträgt.

3. Aluminiumnitridpulver nach Anspruch 1,
wobei in einem SEM-Bild bei 2000-facher Vergrößerung eines Querschnitts der polyedrischen Partikel für 10 willkürlich ausgewählte Partikel der Mittelwert ($M_A$) des Maximalwerts M des senkrechten Abstands zwischen der der glatten Oberfläche entsprechenden Außenlinie und der die Enden der Außenlinie verbindenden Geraden 0,15 $\mu$m oder weniger beträgt.

4. Aluminiumnitridpulver gemäß einem der Ansprüche 1 bis 3, das zur Füllung von Harzen verwendet wird.

5. Harzzusammensetzung, die das Aluminiumnitridpulver nach Anspruch 1 oder 2 und ein Harz umfasst.

6. Verfahren zur Herstellung eines Aluminiumnitridpulvers gemäß einem der Ansprüche 1 bis 3, umfassend:

einen Schritt 1 des Mischens von 100 Masseteilen eines ersten Aluminiumnitridpulver-Rohmaterials mit einer durchschnittlichen Partikelgröße von 0,5 bis 5 $\mu$m und einer spezifischen Oberfläche von 1,2 bis 16,0 m$^2$/g mit 1 bis 20 Masseteilen eines zweiten
Aluminiumnitridpulver-Rohmaterials mit einer durchschnittlichen Partikelgröße von 3 bis 40 $\mu$m, einer spezifischen Oberfläche von 0,05 bis 1,8 m$^2$/g und einem Verhältnis (SA2/SA1) der spezifischen Oberfläche (SA2) des zweiten Aluminiumnitridpulver-Rohmaterials zur spezifischen Oberfläche (SA1) des ersten Aluminiumnitridpulver-Rohmaterials von 0,8 oder weniger, um eine Rohstoffmischung herzustellen; und
einen Schritt 2 des Erhitzens der Rohstoffmischung auf 1750 bis 2100 °C unter Zufuhr eines Inertgases.

## Revendications

1. Poudre de nitrure d'aluminium ayant une taille moyenne de particules de 5 à 50 $\mu$m et une teneur en oxygène de 0,5 % en masse ou moins, comprenant :

des particules polyédriques présentant au moins deux surfaces lisses sous observation au microscope électronique à balayage à un grossissement de 500x,
dans laquelle, sur une image SEM à un grossissement de 2000x de la section transversale des particules, pour 10 particules choisies arbitrairement, la valeur maximale de la distance perpendiculaire entre la ligne extérieure correspondant à la surface lisse et une ligne droite reliant les extrémités de la ligne extérieure est notée M, et parmi les valeurs mesurées de M pour chacune des 10 particules sélectionnées, la plus grande valeur $M_{max}$ est de 0,3 $\mu$m ou moins, et
dans laquelle, pour les particules polyédriques ayant un axe long (L) de 5 $\mu$m ou plus, la valeur moyenne du rapport (L/D) entre l'axe long (L) et l'axe court (D) se situe dans la plage de 1,0 à 1,4.

2. Poudre de nitrure d'aluminium selon la revendication 1,
dans laquelle la proportion des particules polyédriques est de 70 % ou plus.

3. Poudre de nitrure d'aluminium selon la revendication 1,
dans laquelle, sur une image SEM à un grossissement de 2000x d'une section transversale des particules polyédriques, pour 10 particules choisies arbitrairement, la valeur moyenne ($M_A$) de la valeur maximale M de la distance perpendiculaire entre la ligne extérieure correspondant à la surface lisse et la ligne droite reliant les extrémités de la ligne extérieure est de 0,15 $\mu$m ou moins.

4. Poudre de nitrure d'aluminium selon l'une quelconque des revendications 1 à 3, utilisée pour le remplissage de résine.

5. Composition de résine comprenant la poudre de nitrure d'aluminium selon la revendication 1 ou 2, et une résine.

6. Procédé de fabrication d'une poudre de nitrure d'aluminium selon l'une quelconque des revendications 1 à 3, comprenant :

une étape 1 consistant à mélanger 100 parties en masse d'une première matière première de poudre de nitrure d'aluminium ayant une taille moyenne de particules de 0,5 à 5 $\mu$m et une surface spécifique de 1,2 à 16,0 m$^2$/g avec 1 à 20 parties en masse d'une deuxième matière première de poudre de nitrure d'aluminium ayant une taille moyenne de particules de 3 à 40 $\mu$m, une surface spécifique de 0,05 à 1,8 m$^2$/g, et un rapport (SA2/SA1) entre la surface spécifique (SA2) de la deuxième matière première en poudre de nitrure d'aluminium et la surface spécifique (SA1) de la première matière première en poudre de nitrure d'aluminium de 0,8 ou moins, pour préparer un mélange de matières premières ; et

une étape 2 consistant à chauffer le mélange de matières premières à une température comprise entre 1 750 et 2 100 °C tout en introduisant un gaz inerte.

FIG. 1

FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018216591 A
- JP 2003119010 A
- WO 2017131239 A
- JP 2022067865 A
- JP 2020180221 A
- US 5646078 A
- JP 2020176222 A
- JP H0881207 A
- JP 2021143968 A